(19) Europäisches Patentamt
European Patent Office
Office européen des brevets

(11) EP 2 605 390 A1

(12) **EUROPEAN PATENT APPLICATION**

(43) Date of publication:
**19.06.2013 Bulletin 2013/25**

(51) Int Cl.:
**H02M 5/458** (2006.01) **H02P 9/48** (2006.01)

(21) Application number: **11193243.0**

(22) Date of filing: **13.12.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (71) Applicant: **Siemens Aktiengesellschaft**<br>**80333 München (DE)**<br><br>(72) Inventor: **Heng, Deng**<br>**7330 Brande (DK)** |

(54) **Speed dependent switching frequency reduction in a wind power converter**

(57)    It is described a controller (100) for controlling a frequency converter (210), the frequency converter being adapted to convert a frequency of an electrical input signal (211), wherein the electrical input signal is provided by a power supply unit. The frequency converter comprises an input terminal for receiving the electrical input signal with a first frequency from the power supply unit, an AC-to-DC converter (204) and an DC-to-AC (206) converter for converting, based on a switching frequency, the electrical input signal with the first frequency to an electrical output signal (209) with a second frequency.

The controller is adapted to adjust dynamically the switching frequency being used for converting the electrical input signal to the electrical output signal. The controller comprises an input terminal for receiving an input state signal (102) being indicative of a value representing an actual operational state of the power supply unit, an adjusting unit (101) for adjusting the switching frequency based on the received input state signal, and an output terminal (103) for providing the adjusted switching frequency to the frequency converter. Further a frequency converter and a power generation system are described.

## FIG 3

EP 2 605 390 A1

**Description**

Field of invention

The present invention relates to controller for controlling a frequency converter, the frequency converter being adapted to convert a frequency of an electrical input signal, wherein the electrical input signal is provided by a power supply unit, in particular a generator of a power generation system, in particular a wind turbine. Further, the present invention relates to a frequency converter comprising such a controller. Furthermore, the present invention relates to a power generation system including the frequency converter. Moreover, the present invention relates to a method for controlling a frequency converter. Beyond this, the present invention relates to a computer program for controlling a frequency converter.

Art Background

One or more power generation systems, such as wind turbines, may be connected to a utility grid to supply electric energy to the utility grid. The power provided by the wind turbines and the power needed by the utility grid may have different frequencies, in particular electrical frequencies. In a wind turbine, a frequency converter is used to interface the AC (alternating current) power from the generator to the power or utility grid. The power, provided by the stator as current or voltage, has a varying frequency proportional to the rotor speed. PWM (pulse width modulating) switching may be used for the frequency converter. In conventional systems, a fixed switching frequency is used for the frequency converter. The fixed switching frequency is easy to implement. However, it may provide some disadvantages. A fixed switching frequency will bring quite high harmonic current around switching frequency. The high harmonic current can excite noise and vibration of the generator around the switching frequency. Further, a fixed switching frequency may also cause relatively high switching losses for both converter and generator.

In a variable speed wind turbine, the grid electrical frequency is fixed, for example around 50Hz or 60Hz. The generator electrical frequency is varying with rotor speed. When the wind speed is low, the rotor speed is low. The electrical frequency of the power provided by the generator, for instance as current or voltage may be much lower than that at nominal speed.

A similar situation may occur for an electrical signal provided from a grid to a motor.

Thus, there may be a need for a controller taking into account a varying frequency of a power supply unit when controlling a frequency converter.

Summary of the Invention

This need may be met by the subject matter according to the independent claims. Advantageous embodiments of the present invention are described by the dependent claims.

According to an embodiment, a controller for controlling a frequency converter is provided. The frequency converter is adapted to convert a frequency of an electrical input signal, wherein the electrical input signal is provided by a power supply unit. The frequency converter comprises an input terminal for receiving the electrical input signal with a first frequency from the power supply unit, an AC-to-DC converter and an DC-to-AC converter for converting, based on a switching frequency, the electrical input signal with the first frequency to an electrical output signal with a second frequency. The controller is adapted to adjust dynamically the switching frequency being used for converting the electrical input signal to the electrical output signal. The controller comprises an input terminal for receiving at least one input state signal being indicative of a value representing an actual operational state of the power supply unit, an adjusting unit for adjusting the switching frequency based on the received input state signal, and an output terminal for providing the adjusted switching frequency to the frequency converter.

The term "input/output terminal" may denote an electrical input/output terminal or an input/output node. The term "input signal" may denote an electrical signal, such as an analogue signal or a digital signal. The term "frequency" may denote a frequency of the electrical input signal or the electrical output signal, which may be current or voltage signals, for instance provided from the power supply unit.

The term "dynamically" in this context may denote that the switching frequency may be adjusted repeatedly during operation based on any changes of the operational state of the power supply unit.

In one embodiment, the power supply unit is a generator of a power generation system, in particular a wind turbine. The frequency converter may comprise an output terminal for supplying the electrical output signal with the second frequency to a utility grid.

The wind turbine may comprise a tower, a nacelle mounted on top of the tower, and a rotor rotatably supported within the shaft, wherein at the rotor one or more rotor blades are mounted. The rotor shaft may mechanically be coupled to the generator for generating electric energy when the rotor shaft rotates due to wind impacting on the rotor blades.

**EP 2 605 390 A1**

In particular, the generator of the wind turbine may generate variable frequency AC power signals (or an AC power stream) which may be supplied to the frequency converter, which may be a full-scale converter. AC power signals in this context may refer to current or voltage signals with a specific frequency. The frequency converter may first convert the variable frequency power signal to a DC power signal and may then convert the DC power signal to a fixed frequency power signal having the frequency of the utility grid under normal conditions, i.e. the nominal grid frequency.

The controller may be arranged at turbine level or at the wind farm level. This means that the controller may be separated from the frequency converter.

The term "utility grid" may denote a grid to which the power generation system supplies energy and from which one or more consumers extract electrical energy.

In a further embodiment, the power supply unit is a utility grid and the frequency converter comprises an output terminal for supplying the electrical output signal with a second frequency to a motor.

In the following, the controller and the frequency converter will be described in the context of a generator and a utility grid. However, the same features of the controller and the frequency converter may be used for a utility grid supplying power to a motor.

The adjusting unit may comprise in particular one or more integrated circuits, and/or a computer, a computer program being executed on the computer for adjusting the switching frequency. The adjusted switching frequency may be supplied to the frequency converter in the form of an electrical signal, such as an analogue signal or a digital signal.

As described, the frequency converter comprises an AC-to-DC-converter, also called in the following the generator side converter as this converter receives the power signal from the generator.

In a frequency converter, PWM switching may be used at the generator side converter for regulating the generator voltage and current. For example, a switching frequency of 2.5 kHz may be used when the generator electrical frequency is 20Hz. In each generator electrical period, the generator stator voltage may have 125 pulses generated by PWM switching of power devices. For achieving the control target of the generator, a sufficient or appropriate amount of pulses should be applied within an electrical period. Thus, it may not necessary to have the same switching frequency when the generator speed is low. For example, the same 125 pulses can be generated in one electrical period if the switching frequency is reduced, for instance to 1.25 kHz when the generator electrical frequency is 10Hz.

According to the described controller, the turbine efficiency may be improved by adjusting the switching frequency based on a value of an operational state of the power supply unit. In the case of a generator, the operational state may be for instance the electrical frequency or the rotor speed.

According to an embodiment, the value is the actual electrical frequency of the power supply unit. For instance, the actual electrical frequency of the generator may be used as input signal for adjusting the switching frequency. The generator electrical frequency may have, for instance, already been measured by a software scheme or by sensors for other purposes.

According to a further embodiment, the value is the actual rotor speed. The actual rotor speed may be used as input signal for adjusting the switching frequency. The rotor speed may have, for instance, already been measured by a software scheme or by sensors for other purposes. Further, also a combination of the rotor speed and the electrical frequency of the generator may be used as input signal.

According to a further embodiment, the adjusting unit is adapted to adjust the switching frequency between a predefined minimum value for the switching frequency and a predefined maximum value for the switching frequency. The predefined values may be stored in the controller.

According to a further embodiment, the adjusting unit is adapted to adjust the switching frequency based on the value of the actual operation state and a maximum value of the input state signal over time.

The adjusted switching frequency (fs) may be calculated based on the value (fe) of the actual operational state, for example the generator electrical frequency or rotor speed, a minimum value (fs_Low) and a maximum value (fs_High) for the switching frequency and a maximum value (fe_High) of the generator electrical frequency or the rotor speed.

Based on this, the suitable switching frequency fs can be calculated using the linear equation as below.

$$fs = fs\_Low + fe\frac{fs\_High - fs\_Low}{fe\_High}$$

It should be noted that this is only one example. There may exist other possible ways to calculate a suitable switching frequency.

For instance, during operation of a wind turbine, the switching frequency for the frequency converter may be dynamically adjusted based on this equation. Thus, a much lower switching frequency may be used when the rotor speed or the generator electrical frequency is lower. The same may apply to a utility grid.

3

According to a further embodiment, the input state signal being indicative of the actual value is received from sensors arranged at the power supply unit, for instance the generator. For instance, the electrical frequency of the generator and the rotor speed may be measured or sensed by sensors arranged at or in the generator or converter.

According to a further embodiment, a frequency converter for converting a frequency of an electrical input signal is provided. The electrical input signal is provided by a power supply unit, in particular a generator of a power generation system, in particular a wind turbine. The frequency converter comprises an input terminal for receiving the electrical input power signal with a first frequency from the power supply unit, an AC-to-DC converter and an DC-to-AC converter for converting the electrical input signal with the first frequency to an electrical output signal with a second frequency based on a switching frequency, and the controller having the above described features.

In a further embodiment, the frequency converter is adapted to use pulse width modulation (PWM) for converting the electrical input signal with the first frequency to the electrical output signal with the second frequency, wherein the switching frequency is used for the pulse width modulation. PWM modulation may use a switching frequency as described above.

According to a further embodiment, a power generation system, in particular a wind turbine system, in particular for supplying electrical power to a utility grid is provided. The power generation system comprises a power supply unit, and the frequency converter having the above described features.

The power supply unit, in particular a generator, and the frequency converter may be coupled. The power generation system, in particular a wind turbine, may be equipped with the frequency converter, for instance a full-scale converter, effectively decoupling the rotor side from the grid. In particular, the wind turbine may comprise a tower, a nacelle mounted on top of the tower, and a rotor rotatably supported within the shaft, wherein at the rotor one or more rotor blades are mounted. The rotor shaft may mechanically be coupled to the generator for generating electric energy when the rotor shaft rotates due to wind impacting on the rotor blades.

In particular, the generator of the wind turbine may generate variable frequency AC power signals (or a AC power stream) which may be supplied to the frequency converter. The frequency converter may first convert the variable frequency power signal to a DC power signal and may then convert the DC power signal to a fixed frequency power signal having the frequency of the utility grid under normal conditions, i.e. the nominal grid frequency.

It should be understood that features (individually or in any combination) disclosed, described, used for or mentioned in respect to the description of an embodiment of a controller, a frequency converter or a power generation system may also be (individually or in any combination) applied, used for, or employed for a method for controlling a frequency converter.

According to a further embodiment, a method for controlling a frequency converter is provided. The frequency converter is adapted to convert a frequency of an electrical input signal, wherein the electrical input signal is provided by a power supply unit, in particular a generator of a power generation system, in particular a wind turbine. The frequency converter comprises an input terminal for receiving the electrical input signal with a first frequency from the power supply unit, an AC-to-DC converter and a DC-to-AC converter for converting, based on a switching frequency, the electrical input signal with the first frequency to an electrical output signal with a second frequency. The controller is adapted to adjust dynamically the switching frequency being used for converting the electrical input signal to the electrical output signal. The method further comprises receiving an input state signal being indicative of a value representing an actual operational state of the power supply unit, adjusting the switching frequency based on the received input state signal, and providing the adjusted switching frequency to the frequency converter.

According to a further aspect of the invention, there is provided a computer program for controlling a frequency converter. The computer program, when being executed by a data processor, is adapted for controlling the method as described above.

As used herein, reference to a computer program is intended to be equivalent to a reference to a program element containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

According to a further aspect of the invention there is provided a computer-readable medium (for instance a CD, a DVD, a USB stick, a floppy disk or a hard disk), in which a computer program for controlling a frequency converter is stored, which computer program, when being executed by a processor, is adapted to carry out or control a method for controlling a frequency converter.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings to which the invention is not limited.

Fig. 1 illustrates a controller for controlling a frequency converter according to an embodiment;

Fig. 2 illustrates a wind turbine comprising a frequency converter according to an embodiment;

Fig. 3 illustrates the linear change of the switching frequency with the electrical frequency of the generator according to an embodiment;

Fig. 4 illustrates a specific linear change of the switching frequency with the electrical frequency of the generator according to an embodiment;

Fig. 5 illustrates the linear change of the switching frequency with the rotor speed according to an embodiment.

Detailed Description

The illustration in the drawings is in schematic form. It is noted that in different figures, similar or identical elements are provided with the same reference signs.

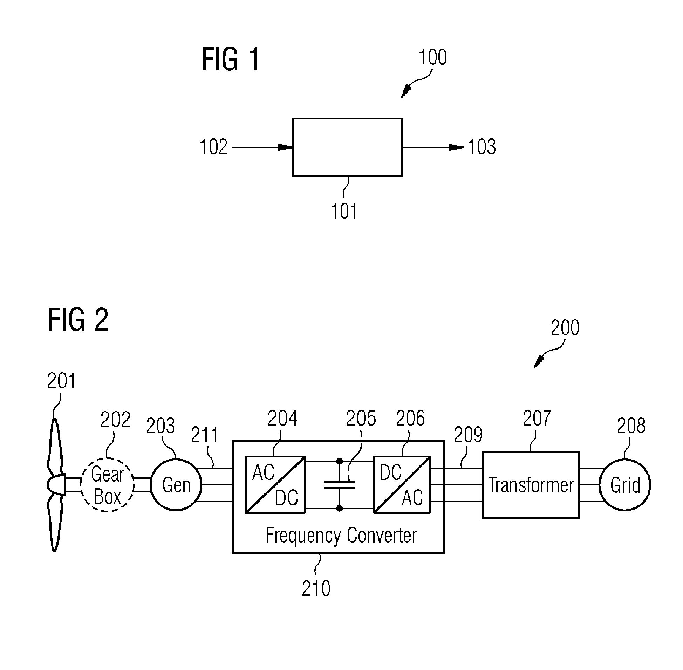

Fig. 1 illustrates a controller 100 for controlling a frequency converter. The frequency converter comprises an AC-to-DC converter and a DC-to-AC converter for converting, based on a switching frequency, an electrical input signal with a first frequency to an electrical output signal with a second frequency, wherein the electrical input signal is provided by a power supply unit, for instance a generator of a power generation system, in particular a wind turbine, or a utility grid.

The controller can dynamically adjust the switching frequency being used for converting the electrical input signal to the electrical output signal. For this purpose, the controller comprises an input terminal 102 for receiving an input state signal being indicative of a value representing an actual operational state of the power supply unit, for instance the generator. The controller further comprises an adjusting unit 101 for adjusting the switching frequency based on the received input state signal 102. The controller further comprises an output terminal 103 for providing the adjusted switching frequency to the frequency converter. For example, the value can be the actual electrical frequency of the generator or the actual rotor speed.

The adjusting unit preferably adjusts the switching frequency between a predefined minimum value for the switching frequency and a predefined maximum value for the switching frequency.

In the following, an exemplary embodiment for a frequency converter between a generator of a turbine and a utility grid will be described. However, it should be noted that a similar arrangement may be used for a frequency converter between a grid and motor.

The controller 100 may be used together with a frequency converter 210 as shown in Fig. 2. In a wind turbine 200 as illustrated in Fig. 2, a frequency converter is used to interface the AC power 211 from the generator 203 to the utility or power grid 208. Optionally, s gear box can be arranged between the rotor 201 and the generator 203. Without the gear box, the same arrangement can be used for direct drive turbines. The stator current/voltage has a varying frequency proportional to rotor speed.

In a common system, PWM switching can be used for both generator side converter (AC/DC converter) 204 and grid-side converter (DC/AC converter) 206. Both converters are coupled via a capacitor 205. A fixed switching frequency (1.25kHz or 2.5kHz) is used for both generator-side converter and grid-side converter. The fixed switching frequency is easy to implement but has some disadvantages. A fixed switching frequency will bring quite high harmonic current around the switching frequency. The high harmonic current can excite noise and vibration of generator around the switching frequency. Further, the fixed switching frequency will also cause relatively high switching losses for both converter and generator.

In a variable speed wind turbine, the grid electrical frequency may be fixed to around 50Hz or 60Hz. The generator electrical frequency is varying with rotor speed. When the wind speed is low, the rotor speed is low. Thus, the electrical frequency of the generator current/voltage is much lower than that at nominal speed.

PWM switching is used at the generator side converter for regulating the generator voltage and current. For example, a switching frequency of 2.5 kHz may be used when the generator electrical frequency is 20Hz. In each generator electrical period, the generator stator voltage has 125 pulses generated by PWM switching of power devices. For achieving the control target of the generator, a suitable number of pulses should be applied within an electrical period. Thus, it is not necessary to have the same switching frequency when generator speed is low. For example, the same 125 pulses can be generated in one electrical period if the switching frequency is reduced to 1.25 kHz when the generator electrical frequency is 10Hz.

To avoid these disadvantages and to improve the efficiency of the frequency convert, the frequency converter 200 comprises a controller as described in Fig. 1. The input power signal 211 is converted by the frequency converter 210 based on the adjusted switching frequency as provided by the controller 100. The output power signal 209 is then supplied to a transformer 207 before being forwarded to the grid 208.

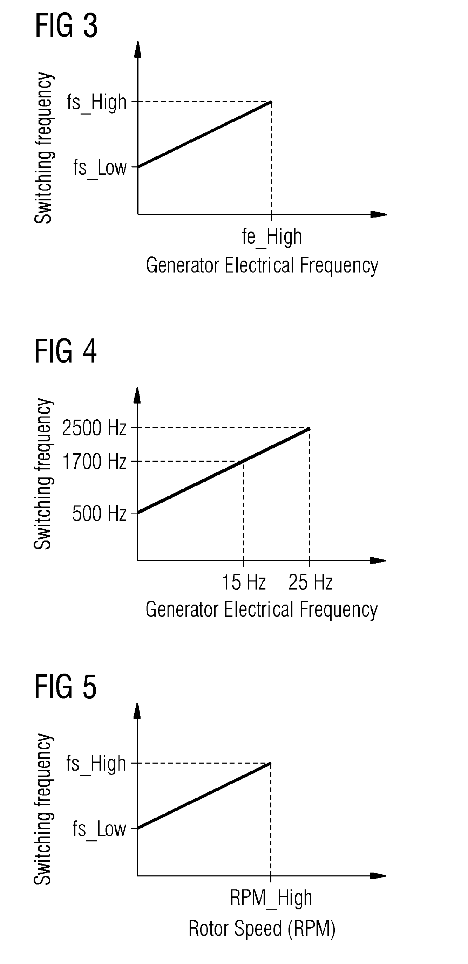

Fig. 3 shows the linear change of the switching frequency with the generator electrical frequency. In the converter controller, the generator electrical frequency fe might already be estimated by software scheme or measured by sensors for other purposes. With the generator electrical frequency fe, the suitable switching frequency fs can be calculated as described above. The switching frequency can be adjusted in a range between a maximum allowed value fs_High and a minimum allowed value fs_Low.

One specific example of the linear change is shown in Fig. 4, wherein the switching frequency is 2500 Hz at a maximum speed/electrical frequency of 25 Hz. There are 100 pulses in the one electrical period. When the rotor speed is low, the electrical frequency is only 15 Hz. The switching frequency is then reduced to 1700 Hz at this speed. Even though the switching frequency is reduced a lot, there are still 113 pulses in one electrical period which is high enough for control purposes.

Similarly, the switching frequency can be also dynamically adjusted with the rotor speed instead of the electrical frequency of the generator as shown in Fig. 5, illustrating a linear change of the switching frequency with the rotor speed.

With the proposed controller, switching losses can be reduced due to the reduced switching frequency at lower rotor speed or lower electrical frequency of the generator. Thus, efficiency of both converter and generator can be improved without additional hardware. Another advantage is that noise and vibration can be reduced because there is no significant harmonic current at a fixed frequency.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. A controller (100) for controlling a frequency converter (210), the frequency converter being adapted to convert a frequency of an electrical input signal (211), wherein the electrical input signal is provided by a power supply unit, wherein the frequency converter comprises
   an input terminal for receiving the electrical input signal with a first frequency from the power supply unit,
   an AC-to-DC converter (204) and an DC-to-AC converter (206) for converting, based on a switching frequency, the electrical input signal with the first frequency to an electrical output signal (209) with a second frequency,
   wherein the controller is adapted to adjust dynamically the switching frequency being used for converting the electrical input signal to the electrical output signal,
   wherein the controller comprises
   an input terminal for receiving an input state signal (102) being indicative of a value representing an actual operational state of the power supply unit,
   an adjusting unit (101) for adjusting the switching frequency based on the received input state signal, and
   an output terminal (103) for providing the adjusted switching frequency to the frequency converter.

2. The controller (100) as set forth in claim 1, wherein the power supply unit is a generator ((203) of a power generation system, in particular a wind turbine (200), and wherein the frequency converter comprises an output terminal for supplying the electrical output signal (209) with the second frequency to a utility grid (208).

3. The controller (100) as set forth in claim 1, wherein the power supply unit is a utility grid, and wherein the frequency converter comprises an output terminal for supplying the electrical output signal with the second frequency to a motor.

4. The controller (100) as set forth in any one of the preceding claims, wherein the value is the actual electrical frequency of the power supply unit.

5. The controller (100) as set forth in any one of the preceding claims, wherein the value is the actual rotor speed.

6. The controller (100) as set forth in any one of the preceding claims, wherein the adjusting unit (101) is adapted to adjust the switching frequency between a predefined minimum value for the switching frequency and a predefined maximum value for the switching frequency.

7. The controller (100) as set forth in claim 6, wherein the adjusting unit (101) is adapted to adjust the switching frequency based on the value of the actual operational state and a maximum value of the input state signal (102) over time.

8. The controller (100) as set forth in any one of the preceding claims, wherein the input state signal being indicative of the value of the actual operational state is received from sensors arranged at the power supply unit.

9. A frequency converter (210) for converting a frequency of an electrical input signal (211), wherein the electrical input signal is provided by a power supply unit,
wherein the frequency converter comprises
an input terminal for receiving the electrical input signal with a first frequency from the power supply unit,
an AC-to-DC converter (204) and an DC-to-AC converter (206) for converting the electrical input signal with the first frequency to an electrical output signal (209) with a second frequency based on a switching frequency, and
the controller (100) as set forth in claim 1.

10. The frequency converter (210) as set forth in claim 9, wherein the frequency converter is adapted to use pulse width modulation for converting the electrical input signal (211) with the first frequency to the electrical output signal (209) with the second frequency, wherein the switching frequency is used for the pulse width modulation.

11. A power generation system, in particular a wind turbine system (200), in particular for supplying electrical power to a utility grid (208), the power generation system comprising
a power supply unit, in particular a generator (203),
and
the frequency converter (210) as set forth in claim 9.

12. A method for controlling a frequency converter, the frequency converter being adapted to convert a frequency of an electrical input signal, wherein the electrical input signal is provided by a power supply unit,
wherein the frequency converter comprises
an input terminal for receiving the electrical input signal with a first frequency from the power supply unit,
an AC-to-DC converter and an DC-to-AC converter for converting, based on a switching frequency, the electrical input signal with the first frequency to an electrical output signal with a second frequency,
wherein the controller is adapted to adjust dynamically the switching frequency being used for converting the electrical input signal to the electrical output signal,
the method further comprising
receiving an input state signal being indicative of a value representing an actual operational state of the power supply unit,
adjusting the switching frequency based on the received input state signal, and
providing the adjusted switching frequency to the frequency converter.

13. A computer program for controlling a frequency converter, the computer program, when being executed by a data processor, is adapted for controlling the method as set forth in claim 12.

FIG 1

100

102 → 101 → 103

FIG 2

200

201 202 203 211 204 205 206 209 207 208

Gear Box | Gen | | AC/DC | | DC/AC | | Transformer | Grid

Frequency Converter

210

FIG 3

Generator Electrical Frequency

FIG 4

Generator Electrical Frequency

FIG 5

Rotor Speed (RPM)

Europäisches
Patentamt

European
Patent Office

Office européen
des brevets

# EUROPEAN SEARCH REPORT

Application Number

EP 11 19 3243

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/023285 A1 (VESTAS WIND SYS AS [DK]; BO YIN [SG]; DENG HENG [SG]; LARSEN KIM B [DK] 4 March 2010 (2010-03-04) * figures 1,5,6,10 * * page 12, line 26 - page 13, line 4 * * page 3, last paragraph * | 1,2,5-13 | INV. H02M5/458 H02P9/48 |
| X | Anonymous: "SINAMICS SM150 - Listenhandbuch 07/2007" In: "SINAMICS SM150 - Listenhandbuch 07/2007", 31 July 2007 (2007-07-31), Siemens AG, XP55035722, pages 1-10, * pages 50,303 * * page 614 * * page 616 - page 617 * * pages 824,825 * * page 868 * | 1-13 | |
| X | BEUERMANN M ET AL: "Modular Load Commutated Inverters - A Proven Concept for High Power Applications", INDUSTRY APPLICATIONS SOCIETY ANNUAL MEETING, 2008. IAS '08. IEEE, IEEE, PISCATAWAY, NJ, USA, 5 October 2008 (2008-10-05), pages 1-7, XP031353991, ISBN: 978-1-4244-2278-4 * figures 1,4 * * Sections II C, V * | 1,9,12, 13 | TECHNICAL FIELDS SEARCHED (IPC) H02M H02P |
| A | EP 1 717 941 A2 (ABB TECHNOLOGY AG [CH]) 2 November 2006 (2006-11-02) * paragraphs [0028] - [0038] * | 1,9, 11-13 | |

-/--

The present search report has been drawn up for all claims

| Place of search | Date of completion of the search | Examiner |
|---|---|---|
| The Hague | 17 August 2012 | Kail, Maximilian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 11 19 3243

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | STEIMEL A: "Direct Self-Control and Synchronous Pulse Techniques for High-Power Traction Inverters in Comparison", IEEE TRANSACTIONS ON INDUSTRIAL ELECTRONICS, IEEE SERVICE CENTER, PISCATAWAY, NJ, USA, vol. 51, no. 4, 1 August 2004 (2004-08-01) , pages 810-820, XP011115702, ISSN: 0278-0046, DOI: 10.1109/TIE.2004.831730 * figure 7 * | 1,9, 11-13 | |

TECHNICAL FIELDS
SEARCHED (IPC)

The present search report has been drawn up for all claims

| Place of search | Date of completion of the search | Examiner |
|---|---|---|
| The Hague | 17 August 2012 | Kail, Maximilian |

EPO FORM 1503 03.82 (P04C01)

## ANNEX TO THE EUROPEAN SEARCH REPORT
## ON EUROPEAN PATENT APPLICATION NO.

EP 11 19 3243

17-08-2012

| Patent document cited in search report | | Publication date | Patent family member(s) | | Publication date |
|---|---|---|---|---|---|
| WO 2010023285 | A1 | 04-03-2010 | CN<br>EP<br>US<br>WO | 102197583 A<br>2327148 A1<br>2011175354 A1<br>2010023285 A1 | 21-09-2011<br>01-06-2011<br>21-07-2011<br>04-03-2010 |
| EP 1717941 | A2 | 02-11-2006 | CN<br>EP<br>US | 1881773 A<br>1717941 A2<br>2006256587 A1 | 20-12-2006<br>02-11-2006<br>16-11-2006 |